# EUROPÄISCHE PATENTSCHRIFT

(11) **EP 1 274 748 B1**
(45) Veröffentlichungstag und Bekanntmachung des Hinweises auf die Patenterteilung: **03.05.2006**
(21) Anmeldenummer: 01931521.7
(22) Anmeldetag: 14.03.2001
(51) Int. Cl.: C08F 10/02, C08F 210/02, C10M 143/02, C08K 5/56, C08L 27/06, C08L 77/00, C08L 23/12

(54) **VERWENDUNG VON POLYOLEFINWACHSEN IN DER KUNSTSTOFFVERARBEITUNG**
USE OF POLYOLEFIN WAXES IN THE FIELD OF PLASTICS PROCESSING
UTILISATION DE CIRES DE POLYOLEFINE DANS LE TRAITEMENT DE MATIERES PLASTIQUES

(30) Priorität: 29.03.2000 DE 10015593
(43) Veröffentlichungstag der Anmeldung: 15.01.2003
(73) Patentinhaber: Clariant Produkte (Deutschland) GmbH, 65929 Frankfurt am Main (DE)
(72) Erfinder: RICHTER, Eric, 86672 Thierhaupten (DE); KIESEL, Harald, 86316 Friedberg (DE)
(86) Internationale Anmeldenummer: PCT/EP2001/002864
(87) Internationale Veröffentlichungsnummer: WO 2001/072855

(56) Entgegenhaltungen:
- EP-A- 0 440 504
- EP-A- 0 889 095
- EP-A- 0 916 700
- EP-A- 1 013 672
- WO-A-96/11228
- WO-A-99/33913
- US-A- 5 707 772

## Beschreibung

Die Erfindung betrifft die Verwendung von Polyolefinwachsen und deren polar modifizierten Derivaten mit besonderer Eignung als Gleit- und Trennmittel bei der thermoplastischen Verarbeitung von Polyvinychlorid, Polyamid oder Polypropylen.

Die Verarbeitung von Kunststoffen erfolgt bis auf wenige Ausnahmen in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren setzt man je nach Kunststoff unterschiedliche Additive ein. So werden aus diesem Grund vielen Kunststoffen in nicht unerheblichem Maße Gleitmittel, insbesondere Polyolefinwachse, beigemengt, die die Aufgabe haben, das Fließverhalten der Schmelze zur verbessern, d.h. die innere und äußere Reibung zu reduzieren. Diese Gleitmittel haben somit nicht nur die Aufgabe, die Rheologie der Kunststoffschmelze zu verbessern, sondern auch die Schädigung des Materials herabzusetzen.

Gleitmittel erfüllen bei der Verarbeitung eine Vielzahl von Aufgaben. Sie sind dafür verantwortlich, dass ein Kunststoff in der Verarbeitungsmaschine gezielt und ausreichend aufschließt und als homogene Schmelze vorliegt. Weiterhin verhindern Gleitmittel das zu starke Kleben der Kunststoffschmelze an heißen Maschinenteilen. Eine Übersicht der in Kunststoffen eingesetzten Gleitmitteln und ihrer Funktionsweise findet sich in R. Gächter, H. Müller (Ed.): "Kunststoffaddittive", 3. Auflage, Hanser Verlag, München 1989, S. 443 ff.

Stand der Technik ist der Einsatz von Polyolefinwachsen und deren polar modifizierten Derivate in weiten Bereichen der Verarbeitung von Thermoplasten. Die Wachse werden nach dem Zieglerverfahren, in einer Hochdruckpolymerisation oder durch Abbaureaktionen hergestellt und gegebenenfalls polar modifiziert (vgl. Ullmann's Encyclopedia of Industrial Chemistry, Weinheim, Basel, Cambridge, New York, Tokyo, 5. Ed., Vol. A 28, S 146 ff). Unter dem Begriff Polyolefinwachse versteht man im allgemeinen die Homo- und Copolymeren des Ethens, Propens und anderer α-Olefine. Polar modifizierte Polyolefinwachse sind oxidierte oder mit polaren Reagenzien gepfropfte Polyolefine. Sie finden in Polyolefinen (Polypropylen, Polyethylen und deren Copolymere), in technischen Thermoplasten (Polyester, Polyamide, Polycarbonate, Styrolpolymere, Polyoxymethylene und thermoplastische Elastomere) und polaren Vinylpolymeren (Polyvinylchlorid und Copolymere des Vinylchlorids, chloriertes Polyethylen) Verwendung. Ihre Aufgabe ist neben einer Verbesserung der Fließfähigkeit durch das Herabsetzen der inneren Reibung vor allem die Trennwirkung. Polyolefinwachse haben die Aufgabe, das Kleben von Kunststoffschmelzen an heißen Maschinenteilen zu verhindern, indem sie als Trennmittel wirken.

Die größte Bedeutung haben Polyolefinwachse und deren polar modifizierten Derivate im Bereich des Hart-PVC. Diese Produkte werden in diesem Anwendungsgebiet üblicherweise für die Regulierung des Aufschmelzverhaltens und der Klebeneigung an den Verarbeitungsaggregaten eingesetzt. Sie werden in der Regel in Kombination mit anderen Wachsen, wie Montanwachsen, Fettsäurederivaten oder Paraffinen eingesetzt. Der Einsatz solcher Produkte ist in der Literatur (z.B. K. Worschech: Gleitmittel für PVC in: G. Becker, D. Braun (Hrsg.): Kunststoff-Handbuch Polyvinylchlorid Bd. 2/1, 2. Aufl., Hanser Verlag, München. S. 571 ff.) und in der Patentliteratur, wie US-5 414 035 und WO-96 11 228 beschrieben. Dort wird der Einsatz von Polyethylenwachsen einer bestimmten Viskosität für Kalanderfolien, insbesondere für Blisterverpackungen und Kreditkarten und für den Spritzguss, insbesondere von Rohrfittings, beschrieben. Die Kalanderfolien zeichnen sich durch eine hohe Transparenz, Stabilität und Plate-out-Beständigkeit aus. Die Spritzgussteile zeigen verbesserte Fertigteileigenschaften.

Polyolefinwachse werden in Praxis in verschiedenen Formen als Gleitmittel eingesetzt. Sie können als reines Produkt einem Kunststoff auf verschiedenen Wegen zugegeben werden. Polyolefinwachse werden auch als Mischung (Pulverblend oder Schmelzeblend) in Kombination mit anderen Gleitmitteln wie Montanwachsen und deren Salzen, Fettsäurederivaten und deren Salzen, Paraffinen, anderen Polyolefinwachsen und deren polar modifizierten Derivaten, Amidwachsen, Siliconen und Fluorkunststoffen eingesetzt. Weiterhin sind Polyolefinwachse Bestandteil von Additivmischungen (One-Packs), die neben Gleitmitteln auch z.B. Thermostabilisatoren, Costabilisatoren, UV-Absorber, Antioxidantien, Lichtschutzmittel, Antistatika, Füllstoffe, Pigmente und Verarbeitungshilfsmittel enthalten können.

Polyolefinwachse werden schon während der Herstellung eines Kunststoffes in den laufenden Polymerisationsprozess hinzugefügt. Weiterhin werden sie einem Polymeren vor einem Verarbeitungsschritt zu gegeben. Dazu kommen verschiedene Verfahren in Frage: Polyolefinwachse können auf ein Polymeres aufgepudert werden, eincompoundiert werden oder in einem kalten oder warmen Pulvermischverfahren in einen Kunststoff eingebracht werden.

Die in der Technik eingesetzten Polyolefinwachse zeigen in ihrer Anwendung als Gleit- und Trennmittel in Kunststoffen einige Nachteile. Herkömmliche Wachse müssen in relativ hohen Mengen zugegeben werden damit eine optimale Wirksamkeit als Gleit- und Trennmittel erzielt werden kann. Zu hohe Dosierungen von Wachsen führt jedoch zu Plate-out (Auswandern) und Ablagerungen an Maschinenteilen, sowie zu Migration von Wachsen an die Oberfläche von Fertigartikeln mit Verschlechterung von Bedruckbarkeit und anderen Nachbearbeitungsschritten (z.B. Verkleben, Metallisieren) sowie insbesondere bei PVC zu einem deutlich reduzierten Energieeintrag bei Verarbeitungsmaschinen mit der Folge eines zu späten oder schlecht kontrollierbaren Aufschmelzens der PVC-Mischung.

Es wurde nun gefunden, dass sich Polyolefinwachse, die mit Hilfe von Metallocenkatalysatoren hergestellt wurden, in besonderer Weise als Gleit- und Trennmittel in Kunststoffen eignen. So ist die erzielbare Gleit- und Trennwirkung mit solchen Polyolefinwachsen in Kunststoffen deutlich höher ausgeprägt ist als mit herkömmlichen Polyolefinwachsen.

Durch die verbesserte Gleit- und Trennwirkung der beanspruchten Polyolefinwachse lässt sich bei gleicher Dosierung ein besserer Effekt erzielen, oder aufgrund der besseren Wirkung kann geringer dosiert werden, um allgemeine Nachteile von Gleitmitteln, wie z.B. Plate-Out, Ablagerungen oder verringerte Bedruckbarkeit zu reduzieren.

Da über die Beziehung zwischen der molekularen Struktur und insbesondere der Molekulargewichtsverteilung von Polyethylenwachsen und ihrer Wirksamkeit als Gleit- und Trennmittel bisher keinerlei Erkenntnisse vorliegen, waren die gefundenen Ergebnisse völlig überraschend.

Gegenstand der Erfindung ist daher die Verwendung von mittels Metallocenkatalysatoren hergestellten Polyolefinwachsen, wobei die Polyolefinwachse Homopolymerisate des Ethylens oder Copolymerisate des Ethylens mit einem oder mehreren 1-Olefinen sind, und als 1-Olefine lineare oder verzweigte, substituierte oder unsubstituierte Olefine mit 3-6 C-Atomen, Verwendung finden, als Gleit- und Trennmittel bei der thermoplastischen Verarbeitung von Polyvinylchlorid, Polyamid oder Polypropylen.

Beispiele für die 1-olefin sind Propen, 1-Buten, 1-Hexen, weiterhin Styrol. Bevorzugt sind Copolymere des Ethylens mit Propen oder 1-Buten. Die Copolymeren bestehen zu 70-99,9, bevorzugt zu 80-99 Gew.-% aus Ethylen. Sind die 1-Olefine substituiert, dann ist der Substituent vorzugsweise ein aromatischer Rest, der mit der Doppelbindung des 1-Olefins in Konjugation steht.

Besonders gut geeignet sind Polyolefinwachse mit einem Tropfpunkt zwischen 90 und 130°C, bevorzugt zwischen 100 und 120°C, einer Schmelzviskosität bei 140°C zwischen 10 und 10000 mPa·s, bevorzugt zwischen 50 und 5000 mPa·s und einer Dichte bei 20°C zwischen 0,89 und 0,96 g/cm³, bevorzugt zwischen
0,91 und
0,94 g/cm³.
Metallocenkatalysatoren zur Herstellung der Polyolefinwachse sind chirale oder nichtchirale Übergangsmetallverbindungen der Formel M¹Lₓ. Die Übergangsmetallverbindung M¹Lₓ enthält mindestens ein Metallzentralatom M¹, an das mindestens ein π-Ligand, z.B. ein Cyclopentadienylligand gebunden ist. Darüber hinaus können Substituenten, wie z.B. Halogen-, Alkyl-, Alkoxy- oder Arylgruppen an das Metallzentralatom M¹ gebunden sein. M¹ ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Die Bezeichnung Metallocen umfasst auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkemigen Metallocene können sowohl gleichartig als auch voneinander verschieden sein. Beispiele für solche mehrkernigen Metallocene sind z.B. beschrieben in EP-A-0 632 063.

Beispiele für allgemeine Strukturformeln von Metallocenen sowie für deren Aktivierung mit einem Cokatalysator sind u.a. in EP-A-0 571 882 gegeben.

Neben unpolaren Metallocenwachsen können auch deren durch polare Modifizierung gewonnenen Derivate eingesetzt werden. Die Modifizierung geschieht beispielsweise durch Oxidation mit Sauerstoff oder sauerstoffhaltigen Gasen oder durch Pfropfung mit polaren Monomeren, beispielsweise Maleinsäure oder deren Derivate.

Die beschriebenen Polyolefinwachse auf Metallocenbasis können in verschiedenen Formen einem Kunststoff hinzugefügt werden:

Die Polyolefinwachse können einzeln auf kalte oder warme Träger (z.B. dem Kunststoff) aufgetrommelt, eincompoundiert, oder in einem kalten oder warmen Pulvermischprozess in einen Kunststoff eingemischt werden. Sie können als Pulver- oder Schmelzeblend gemeinsam mit anderen Gleitmitteln wie Montanwachsen und deren Salze, Fettsäurederivaten und deren Salze, Paraffinen, anderen Polyolefinwachsen und deren polar modifizierten Derivaten, Amidwachsen, Siliconen und Fluorkunststoffen eingesetzt werden.

Die Polyolefinwachse können als Bestandteil von Additivmischungen (One-Packs) eingesetzt werden. Diese One-Packs bestehen aus verschiedenen Gleitmitteln, Thermostabilisatoren, Costabilisatoren, UV-Absorbern Antioxidantien, Lichtschutzmitteln, Antistatika, Füllstoffen, Pigmenten, Verarbeitungshilfsmitteln und anderen Wirkstoffen.

Die Polyolefinwachse werden zur optimierten Verteilung vorzugsweise in mikronisierter Form in Mischungen aus überwiegend pulverförmigen Ausgangsstoffen eingesetzt. Sie können schon während der Herstellung eines Kunststoffes in der Polymerisation hinzugefügt werden.

Die Polyolefinwachse werden vorzugsweise vordispergiert in Form von Wachskonzentraten (Masterbatches) in einem Trägerkunststoff (z.B. Polyolefin) eingesetzt.

In den nachfolgenden Beispielen werden folgende Polyolefinwachse hinsichtlich Ihrer Gleit- und Trennwirkung in Kunststoffen verglichen.

### Beispiele

| | Produkt | Verfahren | Tropfpunkt | Säurezahl | Viskosität, 140°C |
|---|---|---|---|---|---|
| Bsp. 1 | Ethylen-Homopolymer | Metallocen | 125°C | | 320 mPa·s |
| Bsp. 2 | Ethylen-/Propylen- Copolymer | Metallocen | 116°C | | 680 mPa·s |
| Bsp. 3 | Oxidat * | Metallocen | 105°C | 18 mg KOH/g | 250 mPa·s |
| | | | | | |
| Vergl. 1 | Ethylen-Homopolymer | Ziegler | 125°C | | 300 mPa·s |
| Vergl. 2 | Ethylen-/Propylen- Copolymer | Ziegler | 118°C | | 600 mPa·s |
| Vergl. 3 | Ethylen-Homopolymer | Hochdruck | 108°C | | 600 mPa·s |
| Vergl. 4 | Oxidat ** | Ziegler | 108°C | 18 mg KOH/g | 250 mPa·s |

| | | | | | |
|---|---|---|---|---|---|
| *Mittels Luft oxidiertes Ethylen-/Propylen Copolymerwachs aus Beispiel 2 | | | | | |
| **Mittels Luft oxidiertes Ethylen-/Propylen Copolymerwachs aus Vergleich 2 | | | | | |

### Trennwirkung in PVC-hart:

Zur Beurteilung der Trennwirkung von Gleitmitteln in PVC-hart werden üblicherweise mit Zweiwalzwerken klebefreie Zeiten ermittelt. Dazu wird eine verarbeitungsfertige PVC-Mischung auf ein Walzwerk (190°C, 15/20 RPM, Spaltweite ca. 0,5 mm) aufgegeben und die Zeit bis zum Kleben der PVC-Schmelze gemessen. Eine lange klebefreie Zeit bedeutet eine gute Trennwirkung des geprüften Gleitmittels.

| Verwendete PVC-Rezeptur: | |
|---|---|
| Vinnolit® S 3160 | 100,0 phr |
| Irgastab® 17 MOK | 1,5 phr |
| Paraloid® BTA 702 S | 8,0 phr |
| Edenol® D 81 | 0,5 phr |
| Distearylphthalat | 0,3 phr |
| Prüfprodukt | 0,3 phr |

| Erhaltene Ergebnisse: | |
|---|---|
| Beispiel 1 | 18 min klebefreie Zeit |
| Beispiel 2 | 17 min klebefreie Zeit |
| Beispiel 3 | 21 min klebefreie Zeit |
| Vergleich 1 | 11 min klebefreie Zeit |
| Vergleich 2 | 9 min klebefreie Zeit |
| Vergleich 3 | 9 min klebefreie Zeit |
| Vergleich 4 | 16 min klebefreie Zeit |

### Trennwirkung in Polyamid (PA):

Die Trennwirkung von Gleitmitteln in technischen Kunststoffen wird üblicherweise mittels Entformungskraftmessungen beim Spritzgießen quantifiziert. Dazu wird eine zylindrische Hülse im Spritzgießverfahren hergestellt und die benötigte Maximalkraft zum Entformen der Hülse aus dem Werkzeug wird als Entformungskraft registriert. Eine niedrige Entformungskraft zeigt eine gute Trennwirkung des eingesetzten Gleitmittels.

Für ein ungefülltes/unverstärktes PA 6 wurden folgende Ergebnisse ermittelt:
- Beispiel 1:: 550 N, Dosierung 0,3 %
- Beispiel 2:: 650 N, Dosierung 0,3 %
- Beispiel 3:: 500 N, Dosierung 0,3 %
- Vergleich 1:: 900 N, Dosierung 0,3 %
- Vergleich 2:: 980 N, Dosierung 0,3 %
- Vergleich 3:: 850 N, Dosierung 0,3 %
- Vergleich 4:: 800 N, Dosierung 0,3 %

### Trennwirkung in Polypropylen (PP):

Die Trennwirkung von Gleitmitteln in Polyolefinen wird üblicherweise mittels Entformungskraftmessungen beim Spritzgießen quantifiziert. Dazu wird eine zylindrische Hülse im Spritzgießverfahren hergestellt und die benötigte Maximalkraft zum Entformen der Hülse aus dem Werkzeug wird als Entformungskraft registriert. Eine niedrige Entformungskraft zeigt eine gute Trennwirkung des eingesetzten Gleitmittels.

Für ein Talkum-verstärktes PP/EPDM-Compound wurden folgende Ergebnisse bestimmt:
- Beispiel 1:: 750 N, Dosierung 0,1 %
- Beispiel 2:: 700 N, Dosierung 0,1 %
- Beispiel 3:: 600 N, Dosierung 0,1 %
- Vergleich 1:: 900 N, Dosierung 0,1 %
- Vergleich 2: 1050 N, Dosierung 0,1 %
- Vergleich 3:: 950 N, Dosierung 0,1 %
- Vergleich 4:: 850 N, Dosierung 0,1 %

## Patentansprüche

1. Verwendung von mittels Metallocenkatalysatoren hergestellten Polyolefinwachsen, wobei die Polyolefinwachse Homopolymerisate des Ethylens oder Copolymerisate des Ethylens mit einem oder mehreren 1-Olefinen sind, und wobei als 1-Olefine lineare oder verzweigte substituierte oder unsubstituierte Olefine mit 3 bis 6 C-Atomen, Verwendung finden, als Gleit- und Trennmittel bei der thermoplastischen Verarbeitung von Polyvinylchlorid, Polyamid oder Polypropylen.

2. Verwendung nach Anspruch 1, **dadurch gekennzeichnet, dass** Ethylencopolymerwachse, enthaltend 0,1-30 Gew.-% eines oder mehrerer 1-Olefine mit einer Kettenlänge von 3 bis 6 C-Atomen eingesetzt werden.

3. Verwendung gemäß Anspruch 1, **dadurch gekennzeichnet, dass** Copolymerwachse des Ethylens mit 0,1-30 Gew.-% Propen oder 1-Buten eingesetzt werden.

4. Verwendung gemäß einem oder mehreren der Ansprüche 1 bis 3, **dadurch gekennzeichnet, dass** die Polyolefinwachse einen Tropfpunkt zwischen 90 und 130 °C und eine Schmelzviskosität bei 140 °C zwischen 10 und 10 000 mPa·s aufweisen.

5. Verwendung gemäß einem oder mehreren der Ansprüche 1 bis 4, **dadurch gekennzeichnet, dass** die Polyolefinwachse polar modifiziert sind.

6. Verwendung gemäß einem oder mehreren der Ansprüche 1 bis 5, **dadurch gekennzeichnet, dass** die Polyolefinwachse micronisiert sind.

7. Verfahren zum Verbessern der Gleit- und Trennwirkung bei der thermoplastischen Verarbeitung von Polyvinylchlorid, Polyamid oder Polypropylen bei gleicher Dosierung oder zur Verringerung der Dosierung bei gleicher Gleit- und Trennwirkung, wobei dem Polyvinylchlorid oder dem Polyamid oder dem Polypropylen Polyolefinwachse zugesetzt werden, die mittels Metallocenkatalysatoren hergestellte Homopolymerisate des Ethylens oder Copolymerisate des Ethylens mit einem oder mit mehreren 1-Olefinen mit 3 bis 6 C-Atomen sind.

8. Verfahren nach Anspruch 7, **dadurch gekennzeichnet, dass** das Polyolefinwachs dem Polyvinylchlorid oder dem Polyamid oder dem Polypropylen in einer Menge im Bereich von 0,1 bis 30 Gew.-% zugesetzt wird.

## Claims

1. The use of polyolefin waxes prepared by means of metallocene catalyst, where the polyolefin waxes are homopolymers of ethylene or copolymers of ethylene with one or more 1-olefins which may be linear or branched, substituted or unsubstituted and have 3 to 6 carbon atoms, as lubricants and release agents in the thermoplastic processing of polyvinyl chloride, polyamide or polypropylene.

2. The use as claimed in claim 1, wherein ethylene copolymer waxes containing 0.1-30% by weight of one or more 1-olefins having a chain length of from 3 to 6 carbon atoms are used.

3. The use as claimed in claim 1, wherein copolymer waxes of ethylene with 0.1-30% by weight of propene or 1-butene are used.

4. The use as claimed in one or more of claims 1 to 3, wherein the polyolefin waxes having a dropping point in the range from 90 to 130°C and a melt viscosity at 140°C in the range from 10 to 10 000 mPa s.

5. The use as claimed in one or more of claims 1 to 4, wherein the polyolefin waxes have been modified in a polar manner.

6. The use as claimed in one or more of claims 1 to 5, wherein the polyolefins waxes have been micronized.

7. A method of improving the lubricating and release action in the thermoplastic processing of polyvinyl chloride, polyamide or polypropylene at the same added amount or of reducing the added amount for the same lubricant and release action, wherein polyolefin waxes which are homopolymers or copolymers of ethylene with one or more 1-olefins having from 3 to 6 carbon atoms are added to the polyvinyl chloride or to the polyamide or to the polypropylene and are prepared using metallocene catalysts.

8. The process as claimed in claim 7, wherein the polyolefin wax is added to the polyvinyl chloride or to the polyamide or to the polypropylene in an amount in the range from 0.1 to 30% by weight.

## Revendications

1. Utilisation de cires de polyoléfine préparées à l'aide de catalyseurs à base d'un métallocène, les cires de polyoléfine étant des homopolymères de l'éthylène ou des copolymères de l'éthylène et d'une ou plusieurs 1-oléfines, et où on utilise, en tant que 1-oléfines, des oléfines à chaîne droite ou ramifiée, substituées ou non substituées, ayant 3 à 6 atomes de carbone, en tant que lubrifiants et agents de démoulage lors de la mise en oeuvre thermoplastique de poly(chlorure de vinyle), de polyamide ou de polypropylène.

2. Utilisation selon la revendication 1, **caractérisée en ce qu'**on utilise des cires de copolymères de l'éthylène contenant 0,1 à 30 % en poids d'une ou plusieurs 1-oléfines ayant une longueur de chaîne de 3 à 6 atomes de carbone.

3. Utilisation selon la revendication 1, **caractérisée en ce qu'**on utilise des cires de copolymères de l'éthylène avec 0,1 à 30 % en poids de propène ou de 1-butène.

4. Utilisation selon l'une ou plusieurs des revendications 1 à 3, **caractérisée en ce que** les cires de polyoléfine ont un point de goutte compris entre 90 et 130°C et une viscosité à l'état fondu à 140°C comprise entre 10 et 10 000 mPa.s.

5. Utilisation selon l'une ou plusieurs des revendications 1 à 4, **caractérisée en ce que** les cires de polyoléfine ont subi une modification polaire.

6. Utilisation selon l'une ou plusieurs des revendications 1 à 5, **caractérisée en ce que** les cires de polyoléfine sont micronisées.

7. Procédé pour améliorer l'effet de lubrification et de démoulage lors de la mise en oeuvre thermoplastique de poly(chlorure de vinyle), de polyamide ou de polypropylène, pour une dose égale, ou pour diminuer la dose, pour un effet de lubrification ou de démoulage identique, procédé dans lequel on ajoute au poly(chlorure de vinyle) ou au polyamide ou au polypropylène des cires de polyoléfine qui sont des homopolymères, préparés à l'aide de catalyseurs à base de métallocènes, de l'éthylène ou des copolymères de l'éthylène avec une ou plusieurs 1-oléfines ayant 3 à 6 atomes de carbone.

8. Procédé selon la revendication 7, **caractérisé en ce que** la cire de polyoléfines est ajoutée au poly(chlorure de vinyle) ou au polyamide ou au polypropylène en une quantité comprise dans la plage de 0,1 à 30 % en poids.
